Europäisches Patentamt

European Patent Office

Office européen des brevets

(11) Publication number: **0 326 754**
**A2**

## (12) EUROPEAN PATENT APPLICATION

(21) Application number: 88311688.1

(51) Int. Cl.⁴: **B62B 3/10**

(22) Date of filing: 09.12.88

(30) Priority: 09.12.87 GB 8728788

(43) Date of publication of application:
09.08.89 Bulletin 89/32

(84) Designated Contracting States:
AT BE CH DE ES FR GB GR IT LI LU NL SE

(71) Applicant: UNIVERSAL AUTOMATION
TECHNOLOGY LIMITED
14 North Parade
Penzance Cornwall(GB)

(72) Inventor: Iles, Frank
Loscombe Farm Loscombe Lane Four Lanes
Redruth Cornwall(GB)

(74) Representative: Milhench, Howard Leslie et al
R.G.C. Jenkins & Co. 26 Caxton Street
London SW1H 0RJ(GB)

(54) **Dolly for vehicles.**

(57) A motorised dolly for use in assisting the movement of a wheled vehicle is disclosed. The dolly comprises a chassis 7 coupled to a motor driver axle driven by a motor 2 via a gearbox 4 and a belt drive 5, and supporting a wheel 6 at each end thereof. Vehicle engaging means in the form bifurcated structures 12 supported at the end of an inverted T shaped member 10 secured to a pivoting member 9 pivotally attached to the chassis, extend forwardly of the chassis for engagement with part of a vehicle. A handle 15 extends rearwardly of the chassis and is arranged so that when the handle is lowered by a user, the axle and wheels act as a fulcrum about which the chassis pivots causing the vehicle engaging means, and hence the part of the vehicle engaged therewith, to be raised.

FIG.1.

## DOLLY FOR VEHICLES

This invention relates to dolly means for use in assisting the movement of a wheeled vehicle, particularly an unpowered vehicle such as for example a supermarket trolley. Unpowered, unpropelled or non-self-propelled wheeled vehicles such as wheelbarrows, stillage trucks, hospital food and maintenance trolleys and supermarket trolleys for example can carry loads considerably heavier than can be manually lifted and are convenient for most people, particularly if reasonably fit and able-bodied, to transport such loads by manual pulling or pushing over short distances. However, even for a reasonably fit person a heavily-laden supermarket trolley, for example, can be difficult to push across a car park, particularly if the surface is rough. For an elderly or infirm person, the movement of such a trolley may be beyond his or her capability and the services of a porter or other assistant must be sought. In particular, a train of empty supermarket trolleys, nested together, is a very heavy and awkward load to be manhandled from various dispersal points in a car park, to the extent that generally two people are required for this purpose.

The present invention aims to provide means for assisting the propulsion of a wheeled vehicle, such as a supermarket trolley, or of a plurality of empty supermarket trolleys.

According to one aspect of the present invention there is provided a motorised dolly for use in assisting the movement of a wheeled vehicle, the dolly comprising:
a chassis coupled to a motor driver wheel supporting axle, vehicle engaging means extending forwardly of the chassis for engaging with part of a vehicle and handle means extending rearwardly of the chassis and arranged such that in use lowering of the handle means causes raising of the engaging means causing part of a vehicle engaged therewith to be raised, thereby to assist in moving the vehicle.

According to another aspect of the invention, a dolly is proposed for assisting the movement of a wheeled vehicle, the dolly comprising a chassis carried on an axle having motor drivable wheels mounted thereon and including engagement means for the vehicle extending forwardly of the axle and handle means extending rearwardly, whereby lowering of the handle means causes raising of the support means enabling one end of a vehicle engaged therewith to be raised leaving at least one wheel of the vehicle in contact with the ground.

It will be appreciated that in lowering the handle means the axle acts as a fulcrum about which the chassis pivots to raise the vehicle engagement means. Furthermore, it will be apparent that the engagement means, which preferably take the form of cradles or other suitable receiving means for the vehicle, can act either on the body or frame of the wheeled vehicle or on one or more of the wheels thereof, to raise it at one end such that the vehicle can be moved on the said at least one wheel thereof at the other end. Preferably, however, the vehicle engagement means comprises two cradles each having the form of a fork structure and spaced apart transversely, the members being engageable with ground-contacting elements of the wheeled vehicle for raising the elements clear of the ground on lowering of the handle means.

Preferably, the engagement means is pivotally attached to the chassis about a substantially vertical pivot axis, to permit the vehicle to be steered by sideways movement of the handle means.

In an embodiment to be described hereinafter, the height of the engaging means can be adjusted according to the height of the desired lifting point of the vehicle to be moved. Furthermore, in this preferred embodiment the engaging means includes two or more cradles transversely spaced apart and the distance between them can be adjusted to match the distance apart of the respective wheels of the vehicle to be moved.

Where the vehicle engagement means comprises fork structures which are engageable with ground-contacting elements of the vehicle to be moved, such that they are engageable by sliding the forks on either side of the ground-contacting elements, the engagement means preferably includes retention means for the ground-contacting elements whereby, the elements having been raised off the ground by the forks, the vehicle can be either pushed or pulled by the dolly without disengagement of the elements. Such retention means may comprise a pin, for example, the pin being insertable behind the ground-contacting elements through holes formed in the forks.

Other features of the invention are set forth in the appended claims and, together with the abovementioned features, will be well understood from consideration of the following description given with reference to the accompanying drawings, in which

Figure 1 shows a side elevation of an exemplary form of dolly according to the invention engaged with a supermarket trolley; and

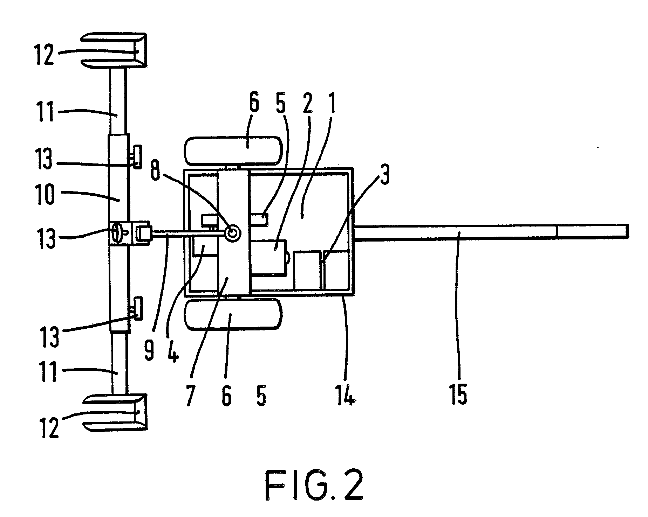

Figure 2 shows in plan view of the dolly of Figure 1.

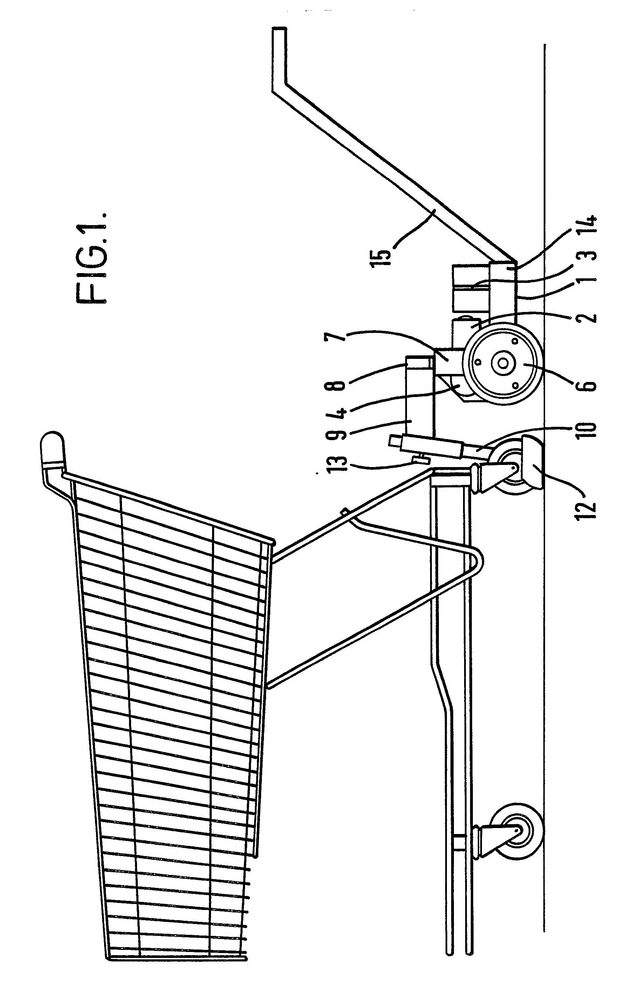

Referring to Figure 1, a dolly is shown at 1 driven by an electric motor 2 powered by rechargeable batteries 3. The electric motor 2 drives via a reduction gear box 4 and also a toothed belt drive 5, for further speed reduction and more torque, a pair of wheels 6. Mounted directly above the axis of the wheels and supported by an inverted 'U' shaped structure 7 is a centrally mounted spigot 8. Pivotally mounted on the spigot and extending forwardly is a pivoting member 9 which adjustably supports an inverted 'T' shaped structure 10. At each extremity of the cross bar of the 'T' is adjustably mounted a slidable support 11 to which is fixed at right angles a two pronged fork shaped structure 12, having such shape as to facilitate location around the lower half of the wheels or supports of the vehicle to be moved.

The design allows adjustment of the two pronged forks 12 to suit different wheel or support centres. The three slidable supports on the structure are lockable by means of the three knurled headed screws 13.

Mounted on the chassis 14 of the vehicle and at right angles to the axis of the driver wheels 6 and opposite the pivotally mounted pivoting member 9 is a steering handle 15, extending rearwardly. The vehicle has a speed control facility and forward or reverse motion with controls mounted on the steering handle 15. The speed and direction of rotation of the motor, and hence the speed and direction of the vehicle can be controlled using any suitable known motor speed control circuit.

To operate, the user first adjusts the slidably mounted forks 12 to suit the wheel or support centres of the vehicle to be moved. The vehicle is then moved so that the two prongs of each fork 12 locate either side of the wheels. The forks are designed in such a way as to support various wheel sizes. Using the driving wheels as a fulcrum, a downward movement of the steering handle 15 raises the fork structure so lifting the wheels of the trolley. In so doing weight is now transferred to the driving wheels giving the tyres the necessary grip for such a light and inexpensively constructed vehicle.

Because the lifting structure is pivotally mounted on the body of the vehicle, the operator has directional control by moving the steering handle to the left or right.

An exemplary embodiment of the invention having been described, it should be apparent to those possessed of the relevant skills that many modifications are possible without departure from the scope of the invention as defined in the accompanying claims. For example, the toothed belt drive may be replaced by a chain drive; the electric motor may be replaced by any suitable prime mover such as an internal combustion engine; and the single steering handle may be modified to include a transverse steering bar. Moveover, although the invention has been particularly described with reference to the propulsion of a single supermarket trolley, it will be apparent that the said single trolley could be an endmost trolley in a train thereof, nested together, and the entire train could be manoeuvred by utilising a dolly according to the invention engaged with the said endmost trolley. Furthermore, it is envisaged that the invention extends to a motorised dolly for use in assisting the movement of any wheeled vehicle, and it is not intended that the invention should be limited to use in moving only supermarket trolleys.

## Claims

1. A motorised dolly for use in assisting the movement of a wheeled vehicle, the dolly comprising:
a chassis coupled to a motor driven wheel supporting axle, vehicle engaging means extending forwardly of the chassis for engaging with part of a vehicle and handle means extending rearwardly of the chassis and arranged such that in use lowering of the handle means causes raising of the engaging means causing part of a vehicle engaged therewith to the raised, thereby to assist in moving the vehicle.

2. A motorised dolly according to claim 1, in which the engaging means comprise vehicle part receiving means arranged to receive a part of the vehicle for engagement therewith.

3. A motorised dolly according to claim 2, in which the vehicle part receiving means define cradle means, such as a forked structure for example, arranged to engage with a respective wheel assembly of the vehicle.

4. A motorised dolly according to any preceding claim, in which the vehicle engaging means are provided at respective end portions of a supporting means pivotally attached to the chassis about a substantially vertical pivot axis, thereby to permit the vehicle to be steered by the dolly in use.

5. A motorised dolly according to any preceding claim, in which the height of the vehicle engaging means is adjustable in relation to the chassis.

6. A motorised dolly according to any preceding claim, in which spaced-apart vehicle engaging means are provided, and the distance between the spaced-apart vehicle engaging means is adjustable.

7. A motorised dolly according to any preceding claim, in which the vehicle engaging means comprise retaining means for use in retaining part of the vehicle engaged with the engaging means.

8. A motorised dolly according to any preceding claim in which the motor driving the axle is an electrical motor, the motor preferably driving the axle via a gearing arrangement.

9. A motorised dolly according to any preceding claim in which the motor is arranged to be controlled by a control means operable at the free end of the handle means.

10. A motorised dolly according to any preceding claim arranged for use with a supermarket trolley.

11. A dolly for assisting the movement of a wheeled vehicle, the dolly comprising a chassis carried on an axle having motor drivable wheels mounted thereon and including engagement means for the vehicle extending forwardly of the axle and handle means extending rearwardly, whereby lowering of the handle means causes raising of the support means enabling one end of a vehicle engaged therewith to be raised leaving at least one wheel of the vehicle in contact with the ground.

FIG.1.

EP 0 326 754 A2

13 9 4 8 7

15

12 10 6 2 1 3 14

12

11

13

10

13

8

13

11

12

9  4

7  6  5

6  5  2  1

3

14

15

# FIG. 2